# EUROPEAN PATENT SPECIFICATION

(11) **EP 1 981 351 B1**
(45) Date of publication and mention of the grant of the patent: **02.01.2013**
(21) Application number: 07715869.9
(22) Date of filing: 08.02.2007
(51) Int. Cl.: A23G 3/34, A23D 7/005, A23L 1/09, A23L 1/0524, A21D 13/00

(54) **COLD-GELLING THIXOTROPIC GLAZE COMPOSITION**
KALT GELIERENDE THIXOTROPE GLASURZUSAMMENSETZUNG
COMPOSITION DE GLACAGE THIXOTROPIQUE GELIFIANT A FROID

(30) Priority: 10.02.2006 EP 06101546
(43) Date of publication of application: 22.10.2008
(73) Proprietor: CSM Nederland B.V., 1112 XE Diemen (NL)
(72) Inventor: CELHAY, Frédéric, F-92250 La Garenne-colombes (FR)
(74) Representative: Swinkels, Bart Willem
(86) International application number: PCT/NL2007/050049
(87) International publication number: WO 2007/091888

(56) References cited:
- EP-A- 0 808 580
- EP-A- 1 563 738
- WO-A-2006/039927
- US-A1- 2003 118 712
- US-B1- 6 699 977
- "Nappage Cake Glaze" ANNOUNCEMENT HERBSTREITH & FOX, 2002, pages 1-7, XP002285887

## Description

### TECHNICAL FIELD OF THE INVENTION

The present invention relates to a cold-gelling thixotropic glaze composition. The glaze composition according to the present invention exhibits significant shear thinning and subsequently forms a firm, non-sticky gel on standing. Thus, the present glaze composition can be made pourable by applying sufficient shear, e.g. by shaking and/or stirring it. The shear thinned pourable glaze composition can be applied directly onto the surface of a food product, following which it will rapidly gel to produce a firm glaze.

### BACKGROUND OF THE INVENTION

Most commercially available glazes can be categorised as so called thermoreversible glazes, meaning that these glazes must be heated in order to render them pourable. The hot pourable product can be applied onto a cold food product and will produce a firm glaze as it cools down. The requirement that thermoreversible glazes must be heated before use is generally regarded as an important drawback of this type of glazes.

As an alternative to thermoreversible glazes, cold gelling thixotropic glazes have been developed. These thixotropic glazes can be liquefied under ambient conditions by stirring. Under quiescent conditions the liquefied glaze will form a weak gel. A disadvantage of these thixotropic glazes resides in the fact that they produce sticky glazes that are not cuttable.

WO 2005/077195 describes a pastry glaze, obtained by solubilising a Ca²⁺ reactive low methoxylated-amidated pectin with a degree of methoxylation of less than 50% and a degree of amidation up to 30% but not 0%, to form a pastry glaze
- that before application, is liquid or semi-liquid in appearance,
- that has a brix of about 30° to about 60°,
- that has an acid pH, and
- that contains Ca²⁺ ions and/or other ions needed for jellification in an amount that is insufficient for jellification before application;
so that the glaze will only jellify when applied onto a food product support that provides the extra amount of Ca²⁺ ions and/or other ions needed for jellification. The glaze compositions described in the examples of WO 2005/077195 comprise 28.5 wt.% of glucose syrup (DE 60) in combination with 8.8-32.4 wt.% of sugar. In order for these glaze compositions to produce a firm glaze, additional Ca²⁺ ions and/or other ions must be introduced into the pastry glaze composition.

Thus, there is an as yet unfulfilled need for a glaze composition that does not suffer from the disadvantages of the glazing compositions described above.

### SUMMARY OF THE INVENTION

The inventors have developed a cold-gelling glaze composition that does not need to be heated before use and that will readily form a firm, non-sticky glaze, without the need of any special measures, including the addition of multivalent cations, such as Ca²⁺. The glaze composition of the present invention has a Brix value in the range of 20-65; contains at least 0.1 wt.% and less than 2.5 wt.% of low methoxylated-amidated (LMA) pectin having a degree of methoxylation of 15-35% and a degree of amidation of 15-30%; and containing at least 34 wt.% of water, wherein mono- and/or disaccharides represent at least 90 wt.% of the total amount of carbohydrate material that is contained in the gloze composition, LMA pectin not included, wherein disaccharides represent at least 50 wt.% of the carbohydrate material contained in the glaze composition, LMA pectin not included.

The present glaze composition exhibits pronounced thixotropic behaviour. Thus, the glaze composition can be rendered pourable by simply applying sufficient shear. Next, the pourable product can applied onto a food product in the same way as ordinary glazes. Once applied, the pourable glaze composition will rapidly gel to form a firm, non-sticky glaze. All this can be done under refrigerated as well as ambient conditions.

Although the inventors do not wish to be bound by theory, it is believed that the desirable properties of the present glaze composition can only be realised if the composition contains substantial levels of saccharides, especially disaccharides. The amide residues contained in the LMA pectin are believed to form low energy bonds with the hydroxyl groups of the saccharides. During stirring, these bonds are broken as a result of which the glaze composition becomes more liquid. Subsequently, these bonds will be formed again under quiescent conditions and the composition will regain its gel properties.

The present invention also provides a method of glazing a food product by applying onto said food product a shear thinned pourable glaze composition as defined herein as well as a food product that has been glazed with said glaze composition.

### DETAILED DESCRIPTION OF THE INVENTION

Accordingly, one aspect of the invention relates to a cold-gelling thixotropic glaze composition having a Brix value in the range of 20-65; containing at least 0.1 wt.% and less than 2.5 wt.% of low methoxylated-amidated (LMA) pectin having a degree of methoxylation of 15-35% and a degree of amidation of 15-30%; and containing at least 34 wt.% of water, wherein mono- and/or disaccharides represent at least 90 wt.% of the total amount of carbohydrate material that is contained in the gloze composition, LMA pectin not included, wherein disaccharides represent at least 50 wt.% of the carbohydrate material contained in the glaze composition, LMA pectin not included, wherein said composition, after it has been sheared sufficiently to have become pourable, forms a gel with a gel strength of at least 10 g when left standing for 60 minutes under quiescent conditions at a temperature of 6 °C (after having previously been tempered at the latter temperature).

The term "low methoxylated-amidated pectin" refers to pectins with a degree of amidation of at least 10% and a degree of methoxylation of at least 5%.

An important advantageous feature of the present glaze composition resides in its ability to produce a firm, cuttable glaze after it has been made pourable and applied onto a food product. Unlike the glazes described in WO 2005/077195 the present glaze forms a cuttable glaze in the absence of Ca²⁺ or other multivalent cations. It was found that the present glaze composition produce firm glazes on supports irrespective of whether or not they provide multivalent metal cations. As a matter of fact, the presence of e.g. Ca²⁺ ions in such a support (e.g. fruit) does not substantially affect the setting properties of the glaze composition.

The advantageous properties of the present glaze composition are reflected in the fact that the composition forms a firm gel when left standing for 60 minutes under quiescent conditions at a temperature of 6 °C. Preferably, under the aforementioned conditions, the present composition forms a gel with a gel strength of at least 15 g, more preferably of at least 20 g and most preferably of at least 25 g. The gel strength is suitably be determined by means of a TAXT2i (ex Stable Micro Systems), using a probe with a diameter of 2 cm. The probe is forced down through a sample, that has previously been tempered at 6°C, at a speed of 0.5 mm/s for 20 seconds. The maximum force (in grams) needed to maintain this speed is recorded and represents the gel strength. The sample is prepared by pouring a sufficient amount of the glaze composition into a cup with an internal diameter of 57 mm to realise a sample height of 26 mm.

The ability of the present (gelled) glaze composition to become pourable as a result of shear thinning is reflected in a preferred embodiment in which the glaze composition exhibits a viscosity of less than 10,000 mPa.s after 1000 seconds at a shear rate of 0.04 s⁻¹. More preferably, said viscosity is less than 1,000 mPa.s, even more preferably less than 300 mPa.s and most preferably less than 100 mPa.s. The aforementioned viscosity is suitably measured in a Haake® VT 550 viscometer, using a FL100 probe at 0.2 rpm. The probe is rotated during 1000 seconds. The minimum viscosity observed during this period is recorded. The shear rate employed during analysis causes shear thinning, resulting in a pourable composition with a relatively low viscosity. The present glaze composition after having been subjected to the aforementioned analysis will yet again form a firm gel as defined herein before when left standing for 60 minutes under quiescent conditions at a temperature of 6°C.

The present glaze composition preferably has a Brix value in the range of 25-62. Most preferably, the Brix value is within the range of 28-60.

As explained herein before, in order to realise the desired thixotropic behaviour, the present glaze composition must contain substantial levels of saccharides, especially disaccharides. Examples of disaccharides that may advantageously be employed in the present glaze composition include sucrose, lactose, maltose and combinations thereof.

Typically, the present glaze composition contains 20-65 wt.% of mono-, di- and/or trisaccharides. According to a particularly preferred embodiment, the present glaze composition contains 20-65 wt.% of disaccharides. Even more preferably the glaze composition contains 24-55 wt.% of disaccharides, most preferably 26-52 wt.% of disaccharides. Besides disaccharides the present composition may also contain monosaccharides. Typically, the monosaccharide concentration of the present glaze composition does not exceed 30 wt.%. More preferably, the monosaccharide concentration does not exceed 20 wt.%, most preferably it does not exceed 15 wt.%. Calculated on the total amount of mono-, di- and trisaccharides, the present composition preferably contains less than 60 wt.%, more preferably less than 50 wt.% and most preferably less than 40 wt.% of monosaccharides.

According to another preferred embodiment, the present glaze composition contains less than 10 wt.%, preferably less than 7 wt.%, more preferably less than 5 wt.% of carbohydrate polymers containing at least 4 monosaccharide units. Likewise, the glaze composition contains less than 5 wt.%, preferably less than 3 wt.% of carbohydrate polymers containing at least 6 monosaccharide units.

Mono- and/or disaccharides represent at least 90 wt.%, more preferably at least 95 wt.% of the total amount of carbohydrate material that is contained in the glaze composition, LMA pectin not included. Pisaccharides represent at least 50 wt.%, more preferably at least 60 wt.% of the carbohydrate material that is contained in the glaze composition, LMA pectin not included.

It was found that glaze compositions exhibiting desirable properties can be obtained by incorporating therein less than 2.5 wt.% of LMA-pectin, preferably 0.1-2.0 wt.% of LMA pectin. Particularly useful glazing compositions can be obtained if LMA-pectin is present in concentration of 0.1-1.5 wt.%, more preferably of 0.15-1.0 wt.%.

The glaze composition of the present invention advantageously has an acid pH. Typically, the glaze composition has a pH of less than 5.0. Preferably the glaze composition has a pH in the range of 2.5-5.0, more preferably in the range of 3.0-4.5.

As explained herein before, the present glaze composition is capable of forming a firm, cuttable gel in the absence of multivalent metal cations that are capable of inducing the formation a LMA pectin gel structure. Examples of multivalent metal cations that are capable of cross-linking the LMA pectin into a gel-structure include Ca²⁺ and Mg²⁺. Small quantities of multivalent metal cations may be present in glaze composition in the form of one or more salts that dissolve essentially completely in the glaze composition. Typically, the glaze composition contains less than 1 mM of dissolved multivalent metal cations. Preferably, dissolved multivalent cations are present in a concentration of not more than 0.25 mM . Expressed differently, the glaze composition preferably contains less than 36 mg, more preferably less than 10 mg of dissolved multivalent cations.

The LMA-pectin employed in accordance with the present invention has a degree of methoxylation of 15-35%. The degree of amidation of the LMA pectin is in the range of 15-30%.

The inventors have observed that the inclusion of a small amount of lipids in the glaze composition can further improve the applicability of the glaze composition. In particular, it was found that the inclusion of lipids reduces the viscosity and/or enhances the smoothness of the shear thinned composition, making it is easier to e.g. brush the composition onto the surface of a food product. In addition, it was found that the inclusion of lipids yields a softer gel with a more pleasant mouthfeel. Accordingly, in a preferred embodiment, the glaze composition additionally contains 0.03-5 wt.%, preferably 0.05-2 wt.% of lipids. Examples of lipids that may suitably be employed include fatty acid esters. More preferably, the lipids are selected from the group consisting of triglycerides, diglycerides, monoglycerides, phosphatides and combinations thereof. The lipids employed in the present glaze composition preferably are liquid at ambient temperature.

The glaze composition of the present invention may suitably contain additional ingredients such as emulsifiers (anti-foaming agent), flavourings and colourings. Preferably, the glaze composition is applied onto sweet food products. Consequently, the glaze composition preferably contains a sweet flavouring, as opposed to a savoury flavouring.

Another aspect of the invention relates to a method of glazing a food product, said method comprising applying onto said food product a shear thinned pourable glaze composition as defined herein before. Food products that may suitably be glazed by means of the present method include baked products, desserts and confectionary. Most preferably, in the present method the food product is a baked product.

Also disclosed is a food product that is glazed with a glaze composition as defined herein before. Preferably, the glaze is applied as a layer with an average thicknes of 0.2-5 mm, preferably of 0.3-2 mm.

The invention is further illustrated by means of the following examples.

### EXAMPLES

### Example 1

Glaze compositions were prepared using the following recipes (in % by weight):

| | 1A | 1B | 1C | 1D | 1E |
|---|---|---|---|---|---|
| Sucrose | 55 | 42.5 | 47.7 | 50.4 | 29.1 |
| LMA pectin ^{#} | 0.35 | 0.623 | 0.567 | 0.33 | 0.832 |
| Citric acid | 0.4 | 0.467 | 0.426 | 0.375 | 0.416 |
| Myvacet (anti-foaming agent) | 0.075 | 0.078 | 0.071 | 0.075 | 0.139 |
| Trisodium citrate | 0.08 | 0.078 | 0.071 | 0.075 | 0.069 |
| Potassium sorbate | 0.1 | 0.101 | 0.092 | 0.097 | 0.090 |
| Water | 44.0 | 56.1 | 51.1 | 48.7 | 69.3 |
| | | | | | |
| Brix | 55 | 45 | 55 | 55 | 35 |

| | | | | | |
|---|---|---|---|---|---|
| # LMA pectin OG 175 C ex Degussa, having a DE of 22-28 and a DA of 19-23. | | | | | |

The glaze compositions were prepared by dispersing the pectin into demineralised water and boiling for 5 minutes. Next, the other ingredients are added and boiling is continued for 5 more minutes. After addition of flavouring, the resulting compositions were packaged in plastic buckets (1 kg composition per bucket) and allowed to cool down to ambient temperature. The final pH of the glaze compositions was about 3.5.

All of the glaze compositions, formed a gel whilst cooling down. The gelled compositions could easily be rendered pourable by shaking the bucket by hand for 10 seconds. The gel strength of the gelled glaze compositions was subsequently determined using the methodology described herein before, except that the samples were stored overnight instead of 1 hour. The following results were obtained:

| | 1A | 1B | 1C | 1D | 1E |
|---|---|---|---|---|---|
| Gel strength in grams | 52.2 g | 44.6 g | 82.5 g | 52.2 g | 64.0 g |

### Example 2

A glaze composition was prepared using the recipe of glaze composition 1D as described in example 1, with the exception that 0.239 wt.% of oil was incorporated and that the water content was reduced by the same amount. The glaze composition so obtained was found to be less viscous after it was rendered pourable by stirring. Furthermore, after having been rendered pourable, this glaze composition produced a softer gel (gel strength of 25.7 g) that was easier to break than the gel produced by glaze composition 1D.

### Example 3

A glaze composition was prepared using the recipe of glaze composition 1D as described in example 1 (sample 3A). Another glaze composition (sample 3B) was prepared using the same recipe, expect that 0.01 wt.% calcium acetate was added. After the glaze compositions had been rendered pourable, gel strengths were determined after storage under quiescent conditions (1 hour and overnight) using the methodology described herein before.

The following results were obtained:

| | 3A | 3B |
|---|---|---|
| Overnight storage | 49 g | 13 g |
| 1 hour storage | 30 g | n.d. |

| | | |
|---|---|---|
| n.d. = not determined | | |

Sample 3B exhibited textural properties that are typical of a "broken gel".

### Example 4

Glaze compositions were prepared using the recipe of glaze composition 1E as described in example 1, using different pectins. The gel strength of the glaze compositions was determined as described herein before. The following results were obtained:

| | **Pectin** | **DE** | **DA** | **Gel strength** |
|---|---|---|---|---|
| 4A | Unipectin OF 305 C (Degussa) | 23-26 | 20-23 | 60.1 g |
| 4B | Grindstcd LA 415 (Danisco) | 26 | 24 | 62.1 g |
| Comparison | Unipectin OG 903 CS (Degussa) | 28-35 | 5-10 | 0 g |

These results show that no gel was formed in case LMC pectin was employed instead of LMA pectin.

### Example 5

Glaze compositions were prepared on the basis of the following recipes (in % by weight):

| | 5A | 5B | 5C | 5D | 5E |
|---|---|---|---|---|---|
| Sucrose | 29.1 | | 20.4 | 12.9 | |
| Lactose | | 29.1 | | | |
| Glucose syrup (60 DE) | | | 8.7 | 16.2 | |
| Dextrin | | | | | 29.1 |
| LMA pectin | 0.831 | 0.831 | 0.831 | 0.831 | 0.831 |
| Citric acid | 0.554 | 0.554 | 0.554 | 0.554 | 0.554 |
| Myvacet (anti-foaming agent) | 0.138 | 0.138 | 0.138 | 0.138 | 0.138 |
| Trisodium citrate | 0.069 | 0.069 | 0.069 | 0.069 | 0.069 |
| Potassium sorbate | 0.090 | 0.090 | 0.090 | 0.090 | 0.090 |
| Water | 69.2 | 69.2 | 69.2 | 69.2 | 69.2 |

| | | | | | |
|---|---|---|---|---|---|
| # LMA pectin OG 175 C ex Degussa, having a DE of 22-28 and a DA of 19-23. | | | | | |

The glaze composition were prepared in the same way as described in Example 1. Again, the final pH of the glaze compositions was about 3.5.

With the exception of glaze composition 5E, all of the glaze compositions, when left standing for 5 minutes, formed a gel. The gelled composition could easily be rendered pourable by shaking by hand for 10 seconds. The gel strength of the glaze compositions was determined using the methodology described herein before. The following results were obtained:

| | 5A | 5B | 5C | 5D | 5E |
|---|---|---|---|---|---|
| Gel strength | 80.5 g | 110 g | 48.5 g | 44 g | 0 g |

Samples 5A and 5B were found to exhibit excellent elasticity, meaning that these samples can be deformed considerably, before breaking.

### Example 6

Another glaze composition was prepared on the basis of the following recipe (in % by weight):

| | |
|---|---|
| | 6 |
| Sucrose | 50.3 |
| LMA pectin ^{#} | 0.449 |
| Citric acid | 0.374 |
| Sunflower oil | 0.125 |
| Trisodium citrate | 0.075 |
| Potassium sorbate | 0.097 |
| Flavour | 0.028 |
| Colour | 0.010 |
| Water | 48.6 |

| | |
|---|---|
| # LMA pectin OF 305 C ex Degussa, having a DE of 23-26 and a DA of 20-23 | |

The glaze composition was prepared in the same way as described in Example 1, except that tap water, containing traces of calcium, was used. Again, the final pH of the glaze compositions was about 3.5.

After the glaze composition had been rendered pourable, the gel strengths was determined after 1 hour storage at 6 °C under quiescent conditions using the methodology described herein before. A gel strength of 34 g was measured.

## Claims

1. A cold-gelling thixotropic glaze composition having a Brix value in the range of 20-65; containing at least 0.1 wt.% and less than 2.5 wt.% of low methoxylated-amidated (LMA) pectin having a degree of methoxylation of 15-35% and a degree of amidation of 15-30%; and containing at least 34 wt.% of water, wherein mono- and/or disaccharides represent at least 90 wt.% of the total amount of carbohydrate material that is contained in the glaze composition, LMA pectin not included, wherein disaccharides represent at least 50 wt.% of the carbohydrate material contained in the glaze composition, LMA pectin not included; and wherein said composition, after it has been sheared sufficiently to have become pourable, forms a gel with a gel strength of at least 10 g when left standing for 60 minutes under quiescent conditions at a temperature of 6 °C.

2. Glaze composition according to claim 1, comprising 20-65 wt.%, preferably 24-55 wt.% of mono-, di- and/or trisaccharides.

3. Glaze composition according to claim 2, wherein the disaccharides are selected from the group consisting of sucrose, lactose, maltose and combinations thereof.

4. Glaze composition according to any one of the preceding claims, said composition, exhibiting a viscosity of less than 10,000 mPa.s after 1000 seconds at a shear rate of 0.4 s⁻¹.

5. Glaze composition according to any one of the preceding claims, containing less than 10 wt.%, preferably less than 7 wt.% of carbohydrate polymers containing at least 4 monosaccharide units.

6. Glaze composition according to any one of the preceding claims, containing 0.1-2.0 wt.% of LMA-pectin, preferably 0.15-1.0 wt.% of LMA pectin.

7. Glaze composition according to any one of the preceding claims, said composition having a pH of less than 5.0.

8. Glaze composition according to claim 10, wherein the LMA pectin has a degree of 20-30%.

9. Glaze composition according to any one of the preceding claims, said composition additionally containing 0.03-5 wt.% of lipids.

10. A method of glazing a food product, said method comprising applying onto said food product a shear thinned pourable glaze composition according to any one of the preceding claims.

## Patentansprüche

1. Kalt gelierende thixotrope Glasurzusammensetzung mit einem Brix-Wert im Bereich von 20-65; enthaltend wenigstens 0,1 Gew.-% und weniger als 2,5 Gew.-% niedrig methoxyliertes-amidiertes Pektin (LMA-Pektin) mit einem Methoxylierungsgrad von 15-35 % und einem Amidierungsgrad von 15-30 %; und enthaltend wenigstens 34 Gew.-% Wasser, worin Mono- und/oder Disaccharide wenigstens 90 Gew.-% der Gesamtmenge an Kohlenhydratmaterial ausmachen, welches in der Glasurzusammensetzung enthalten ist, wobei LMA-Pektin nicht eingeschlossen ist, worin Disaccharide wenigstens 50 Gew.-% des in der Glasurzusammensetzung enthaltenen Kohlenhydratmaterials ausmachen, wobei LMA-Pektin nicht eingeschlossen ist; und wobei die Zusammensetzung, nachdem sie ausreichend geschert wurde, so dass sie gießfähig geworden ist, ein Gel mit einer Gelstärke von wenigstens 10 g bildet, wenn sie 60 Minuten unter Ruhebedingungen bei einer Temperatur von 6 °C stehengelassen wird.

2. Glasurzusammensetzung nach Anspruch 1, umfassend 20-65 Gew.-%, vorzugsweise 24-55 Gew.-% Mono-, Di- und/oder Trisaccharide.

3. Glasurzusammensetzung nach Anspruch 2, wobei die Disaccharide ausgewählt sind aus der Gruppe bestehend aus Sucrose, Lactose, Maltose und Kombinationen davon.

4. Glasurzusammensetzung nach einem der vorangehenden Ansprüche, wobei die Zusammensetzung eine Viskosität von weniger als 10000 mPa·s nach 1000 Sekunden bei einer Schergeschwindigkeit von 0,4 s⁻¹ aufweist.

5. Glasurzusammensetzung nach einem der vorangehenden Ansprüche, enthaltend weniger als 10 Gew.-%, vorzugsweise weniger als 7 Gew.-% Kohlenhydratpolymere, die wenigstens 4 Monosaccharideinheiten enthalten.

6. Glasurzusammensetzung nach einem der vorangehenden Ansprüche, enthaltend 0,1-2,0 Gew.-% LMA-Pektin, vorzugsweise 0,15-1,0 Gew.-% LMA-Pektin.

7. Glasurzusammensetzung nach einem der vorangehenden Ansprüche, wobei die Zusammensetzung einen pH von weniger als 5,0 aufweist.

8. Glasurzusammensetzung nach Anspruch 10, wobei das LMA-Pektin einen Amidierungsgrad von 20-30 % aufweist.

9. Glasurzusammensetzung nach einem der vorangehenden Ansprüche, wobei die Zusammensetzung zusätzlich 0,03-5 Gew.-% Lipide enthält.

10. Verfahren zum Glasieren eines Nahrungsmittelprodukts, wobei das Verfahren das Aufbringen einer durch Scherung verdünnten gießfähigen Glasurzusammensetzung nach einem der vorangehenden Ansprüche auf das Nahrungsmittelprodukt umfasst.

## Revendications

1. Composition de glaçage thixotrope gélifiant à froid ayant une valeur Brix dans la plage de 20 à 65 ; contenant au moins 0,1 % en poids et moins de 2,5 % en poids d'une pectine faiblement méthoxylée-amidée (LMA) ayant un degré de méthoxylation de 15 à 35 % et un degré d'amidation de 15 à 30 % ; et contenant au moins 34 % en poids d'eau, dans laquelle des mono- et/ou des di-saccharides représentent au moins 90 % en poids de la quantité totale du matériau hydrate de carbone qui est contenu dans la composition de glaçage, la pectine LMA n'étant pas incluse, dans laquelle les disaccharides représentent au moins 50 % en poids du matériau hydrate de carbone contenu dans la composition de glaçage, la pectine LMA n'étant pas incluse ; et dans laquelle ladite composition, après avoir été suffisamment cisaillée pour pouvoir être versée, forme un gel avec une force de gel d'au moins 10 g, lorsqu'il est laissé au repos pendant 60 minutes dans des conditions de repos à une température de 6°C.

2. Composition de glaçage selon la revendication 1, comprenant 20 à 65 % en poids, de préférence de 24 à 55 % en poids, de mono-, di- et/ou trisaccharides.

3. Composition de glaçage selon la revendication 2, dans laquelle les disaccharides sont choisis dans le groupe constitué du saccharose, du lactose, du maltose et des combinaisons de ceux-ci.

4. Composition de glaçage selon l'une quelconque des revendications précédentes, ladite composition présentant une viscosité inférieure à 10 000 mPa.s après 1000 secondes à un taux de cisaillement de 0,4 s⁻¹.

5. Composition de glaçage selon l'une quelconque des revendications précédentes, contenant moins de 10 % en poids, de préférence moins de 7 % en poids, de polymères d'hydrate de carbone contenant au moins 4 motifs monosaccharide.

6. Composition de glaçage selon l'une quelconque des revendications précédentes, contenant 0,1 à 2,0 % en poids de pectine LMA, de préférence 0,15 à 1,0 % en poids de pectine LMA.

7. Composition de glaçage selon l'une quelconque des revendications précédentes, ladite composition ayant un pH inférieur à 5,0.

8. Composition de glaçage selon la revendication 10, dans laquelle la pectine LMA a un degré d'amidation de 20 à 30 %.

9. Composition de glaçage selon l'une quelconque des revendications précédentes, ladite composition contenant de plus 0,03 à 5 % en poids de lipides.

10. Procédé de glaçage d'un produit alimentaire, ledit procédé comprenant l'application sur ledit produit alimentaire d'une composition de glaçage versable, étendue par cisaillement selon l'une quelconque des revendications précédentes.
